# EUROPÄISCHE PATENTANMELDUNG

(11) **EP 2 206 994 A2**
(43) Veröffentlichungstag der Anmeldung: **14.07.2010**
(21) Anmeldenummer: 09015640.7
(22) Anmeldetag: 17.12.2009
(51) Int. Cl.: F25B 17/08, F25B 43/04

(54) **Vorrichtung und Verfahren zum Entfernen störender Inertgase aus geschlossenen Sorptionssystemen**

(30) Priorität: 23.12.2008 DE 102008062961
(71) Anmelder: ZEO-TECH Zeolith Technologie GmbH, 85716 Unterschleissheim (DE)
(72) Erfinder: Maier-Laxhuber, Peter, Dr., 85276 Pfaffenhofen (DE)

(57) **Zusammenfassung**

Geschlossenes Sorptionssystem (1) mit einem dampfförmigen Arbeitsmittel, das von einem festen Sorptionsmittel reversibel und periodisch sorbiert wird, wobei das Sorptionssystem (1) einen Reaktions-Stoff enthält, der mindestens eines im Sorptionsmittel nicht oder nur schwer sorbierbares Inertgas bindet und der Reaktions-Stoff mindestens soviel Inertgas binden kann, wie im Sorptionssystem (1) durch Entgasung oder chemischer Reaktion der darin enthaltenen Materialien während der gesamten Betriebszeit frei wird und als Reaktionsprodukte lediglich unlösliche Stoffe und eventuell Wasser entstehen.

## Beschreibung

Die Erfindung betrifft Vorrichtungen und Verfahren zum Entfernen störender Inertgase aus geschlossenen, periodisch arbeitenden Sorptionssystemen gemäß dem Oberbegriff der Ansprüche 1 und 14.

In der DE-OS-34 25 419 sind Heiz- und Kühlverfahren beschrieben, die nach dem Sorptionsprinzip mit dem Stoffpaar Zeolith-Wasser unter Vakuumbedingungen arbeiten. Das feste Sorptionsmittel Zeolith sorbiert dabei ein Arbeitsmittel (z.B. Wasserdampf), sofern dieser ungehindert von Inertgasen in das Sorptionsmittelgefüge einströmen kann.

Inertgase können im Sorptionsmittel bzw. Arbeitsmittel vorsorbiert sein, durch chemische Reaktionen freigesetzt werden, aus den vorhandenen Materialien (Behälterwände, Dichtmaterialien, Wärmetauscher usw.) ausgasen oder über Leckagen in das System eintreten. Die störenden Fremdgase oder -dämpfe verhindern einen schnellen Sorptionsprozess, da sie den Zutritt des dampfförmigen Arbeitsmittels zum Sorptionsmittel erschweren, was zu einer deutlichen Verlangsamung der Kälte- bzw. Wärmeerzeugung führen kann. Ein erheblicher Leistungsabfall dieser Sorptionssysteme ist die Folge.

In Sorptionssystemen hat sich der Einsatz von Zeolith als Sorptionsmittel und von Wasser als Arbeitsmittel als vorteilhaft erwiesen. Zeolithe haben eine sehr hohe Fähigkeit, Wasser aufzunehmen. Dabei werden große Mengen Sorptionswärme frei. Zusätzlich hat Wasser eine hohe Verdampfungs- sowie Erstarrungsenthalpie, so dass sich dieses Stoffpaar besonders für Heiz- und Kühlverfahren nach dem Sorptionsprinzip eignet. Bei Verwendung dieses Stoffpaares treten in Sorptionssystemen insbesondere die Inertgase H₂ und CO₂ auf. Werden diese für den Sorptionsprozess inerten Gase nicht aus dem Vakuumsystem entfernt, wird der Sorptionsprozess spürbar behindert.

In der DE 10 2007 001 905 ist ein Verfahren zur Montage eines Wärmepumpen-Moduls mit dem Sorptionsstoffpaar Zeolith-Wasser beschrieben. Die Erfindung offenbart, zumindest einzelne Komponenten wie Behälter, Verdampfer/Kondensator, Wärmetauscher und Sorptionsmittel vor dem Zusammenbau in einem Vakuumofen bei hoher Temperatur zu reinigen und zu konditionieren. Das sehr zeit- und kostenintensive Verfahren beschreibt eine Reinigung der Komponenten vor dem Zusammenbau. Gase, die während der Betriebszeit z.B. durch chemische Reaktionen entstehen, können damit nicht entfernt werden.

Die DE 4444252 offenbart den Einsatz des Bindemittels Ca(OH)₂ um das Fremdgas CO₂ in einem Sorptionssystem, das mit der Stoffpaarung Wasser-Zeolith arbeitet, zu binden. Das pulverförmige Bindemittel kann durch abfliesendes Kondensat aus dem Behältnis ausgeschwemmt werden. Bei größeren Anhäufungen des Materials bilden sich gasdichte Klumpen, welche die Wirkung des Bindemittels stark einschränken.

Bei größeren Sorptionssystemen saugen eigens installierte Vakuumpumpen Inertgase aus dem Vakuumsystem ab. Bei kleinen oder mobilen Sorptionssystemen ist der zusätzliche Aufwand für eine Vakuumpumpe und die dafür notwendige Steuerung nicht wirtschaftlich.

Bei Stoffpaarungen mit Wasser als Arbeitsmittel oder als Sorptionsmittel (z.B. Wasser-LiBr) bildet sich häufig Wasserstoffgas (H₂) bei Kontakt mit metallischen Oberflächen. Dieses störende Inertgas kann auch als Abbauprodukt von Kohlenwasserstoffen entstehen. Auch die Freisetzung voradsorbierten Wasserstoffs aus Sorptionsmitteln wurde beobachtet.

Aufgabe der vorliegenden Erfindung ist es, in Sorptionssystemen störende Inertgase bei der Erstinbetriebsetzung weitestgehend zu entfernen und während der gesamten Betriebszeit dauerhaft zu binden.

Gelöst wird diese Aufgabe durch die kennzeichnenden Teile der Patentansprüche 1 und 14.

Um Sorptionssysteme von störendem Inertgas frei zu halten, wird erfindungsgemäß dem Sorptionssystem ein Reaktions-Stoff hinzugefügt. Dieser bindet im Sorptionssystem vorhandene oder freiwerdende Inertgase bzw. -dämpfe. Der Reaktions-Stoff muss in der Lage sein, soviel Inertgas zu binden, wie im Sorptionssystem durch Entgasung oder chemischer Reaktion der darin enthaltenen Materialien während des gesamten Lebenszyklusses frei wird. Zusätzlich darf er das einmal gebundene Inertgas auch bei systembedingt hohen Temperaturschwankungen nicht wieder freizusetzen.

Um Wasserstoffgas zu binden wird ein Metalloxid, z.B. CuO mit in das Vakuumsystem eingesetzt. Wasserstoffgas H₂ reagiert z.B. bei erhöhten Temperaturen mit CuO nach der Gleichung:

CuO + H₂ → Cu + H₂O

H₂ reduziert CuO zu metallischem Cu und oxydiert selbst zu H₂O. Da Wasser ohnehin als Arbeitsmittel fungiert, sind die Reaktionsprodukte ohne negativen Einfluss auf das Sorptionsverhalten.
Da die Reaktion vornehmlich bei erhöhten Temperaturen abläuft, ist es sinnvoll das Kupferoxid im Bereich des Sorptionsmittels anzuordnen. Hier wird ohnehin während jeder Desorption das Sorptionsmittel aufgeheizt, um das Arbeitsmittel auszutreiben. Während der Desorption wird zwar das gesamte Wasserstoffgas vom abströmenden Wasserdampf in den Kondensator bzw. nachgeschaltete Komponenten mitgerissen und kann demzufolge während der Desorption nicht mit heißem Kupferoxid reagieren. Zu Beginn der Adsorptionsreaktion reversiert jedoch die Strömungsrichtung des Wasserdampfes. Das Inertgas wird nunmehr zum Sorptionsmittel mitgerissen und kann mit dem noch heißen Metalloxid gut reagieren.
Erfindungsgemäß wird somit zu Beginn jedes Adsorptionsvorgangs freier Wasserstoff im Sorptionssystem gebunden.

Metalloxid kann in vielfältiger Form in das Sorptionssystem eingebracht sein. Es kann in pulverisierter Form dem Sorptionsmittel vor dessen Einbringung in das Vakuumsystem beigemischt sein oder vor dem Verschweißen des Sorptionsmittelbehälters an dessen Innenwand als oberflächlich oxidierte Metallfolie eingebracht werden. Besonders vorteilhaft kann es sein, wenn für die Verbesserung der Wärmeleitfähigkeit innerhalb des Sorptionsmittels ohnehin Wärmeleitstrukturen aus Metall (vorzugsweise Kupfer) zum Einsatz kommen. In diesen Fällen muss lediglich beim Zusammenbau des Vakuumsystems ein Teil der Wärmeleitstruktur an Luft erhitzt werden bis sich die Oberfläche mit ausreichend Metalloxid überzogen hat.

Neben Metalloxiden eignen sich erfindungsgemäß auch Metallhydride zur Aufnahme von Wasserstoffgas. In geeigneten Metallen und insbesondere Metalllegierungen (z.B. LaMg2Ni) werden Wasserstoff-Moleküle auf der Oberfläche des Metalls zunächst adsorbiert und dann als elementarer Wasserstoff in das Metallgitter eingebaut. Dadurch entsteht ein recht sprödes Metallhydrid, das wasserunempfindlich ist. Die geeignetste Anordnung dieses Reaktions-Stoffes ist im Kondensator bzw. Verdampfer. Die auftretenden Temperaturschwankungen sind hier am geringsten.

Für das Stoffpaar Wasser/Zeolith mit dem störenden Inertgas CO₂ eignen sich erfindungsgemäß Reaktions-Stoffe, die eine chemische oder physikalische Bindung mit CO₂ eingehen und die beim Binden und Festhalten von CO₂ keine weiteren störenden Gase oder Dämpfe freisetzen. Vorteilhaft sind demnach Reaktionspartner, die sich bei Anwesenheit von CO₂ in Carbonate umwandeln. Der Reaktions-Stoff kann in flüssiger oder fester Form vorliegen und muss die Entfernung des CO₂ aus dem Arbeitsmitteldampfraum nachhaltig unterstützen.

Für das Binden von CO₂ eignet sich erfindungsgemäß Atemkalk wie er heute in Kreislauf-Atemschutzgeräten und Narkosegeräten zum Einsatz kommt. Der Reaktions-Stoff enthält überwiegend Calciumhydroxid Ca(OH)₂ und Natriumhydroxid NaOH. Ca(OH)₂ reagiert dann unter Aufnahme von CO₂ zu CaCO₃.

Im einzelnen laufen dabei die folgenden.Reaktionen ab:

CO₂ + H₂O → H₂CO₃

H₂CO₃ + 2 NaOH → Na₂CO₃ + 2H₂O₊ Wärme

Na₂CO₃ + Ca(OH)₂ → CaCO₃ + 2NaOH

Durch diese Reaktionen wird das Inertgas CO₂ dem Sorptionssystem dauerhaft ohne weitere Steuerungseingriffe entzogen.

Erfindungsgemäß wird der Reaktions-Stoff dort angeordnet, wo sich Inertgase oder -dämpfe bevorzugt ansammeln. Erfahrungsgemäß handelt es sich dabei um Stellen im Kondensator oder nachgeschalteten Komponenten. Inertgase, welche sich bei der Desorption im Arbeitsmitteldampfraum ansammeln, werden durch die Arbeitsmitteldampfströmung aus dem Sorptionsmittelbehälter in den Kondensator mitgerissen. Der nachströmende Arbeitsmitteldampf verhindert ein Rückströmen der auf diese Weise komprimierten Gase in strömungsabgewandte Regionen. Die Grenze zwischen reinem Inertgas und reinem Arbeitsdampf ist in der Regel nicht breiter als 1 cm. Die günstigste Einbauposition für die Reaktions-Stoffe innerhalb der Sorptionssysteme sind folglich die Bereiche in denen sich die Inertgase systembedingt aufkonzentrieren.

Die optimale Granulatdicke des Atemkalks liegt bei 2,5 mm. Reaktions-Stoffe, die in dieser Art in das Sorptionssystem eingebracht wurden, können das Inertgas vollkommen und unbehindert von Arbeitsmitteldampf und fliesendem Kondensat binden.

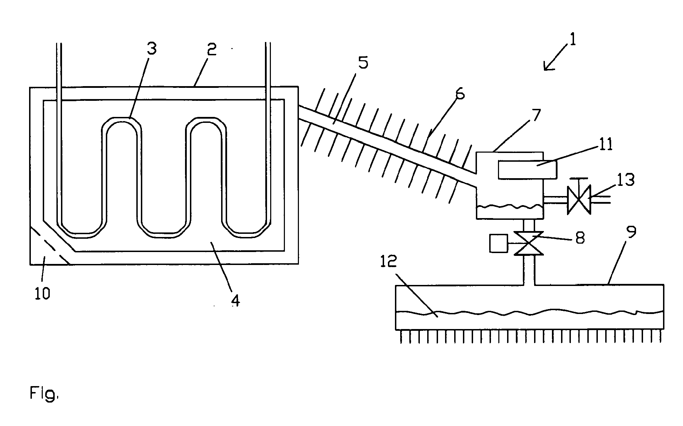

Ein Ausführungsbeispiel der Erfindung ist in der Zeichnung skizziert.

In einem geschlossenen Sorptionssystem 1 enthält ein Sorptionsmittelbehälter 2 eine Zeolithfüllung, einen Rohrheizkörper 3 und ein Wärmeleitblech 4. Ein Dampfkanal 5, der zugleich als Kondenstor 6 fungiert, führt zu einem Sammelbehälter 7, der über ein Ventil 8 an einen Verdampfer 9, der als Arbeitsmittel Wasser 12 enthält, angebunden ist.
Im Sorptionsmittelbehälter 2 ist ein Bereich 10 abgegrenzt, der den Reaktions-Stoff Kupferoxid (CuO) enthält. Das Wärmeleitblech 4 besteht aus Kupfer. Dieses wurde oberflächlich zu Kupferoxid oxidiert. Im oberen Bereich des Sammelbehälters 7 ist eine Patrone 11, gefüllt mit granuliertem Atemkalk als Reaktions-Stoff für das Inertgas CO₂ eingesetzt. An den Sammelbehälter 7 ist auf Höhe des maximalen Wasserstands ein Evakuierventil 13 eingeschweißt, über welches das Sorptionssystem erstmals in Betrieb genommen wird.

Das Sorptionssystem 1 arbeitet periodisch wiederkehrend. Während einer Desorptionsphase wird die Zeolithfüllung über den Rohrheizkörper 3 und das Wärmeleitblech 4 auf hohe Temperaturen (z.B. 250°C) erhitzt. Der Wasserdampfdruck im Sorptionsmittelbehälter steigt dadurch an. Wasserdampf strömt über den Dampfkanal 5 in den Kondensator 6. Unter Wärmeabgabe verflüssigt sich der Dampf bei Temperaturen von ca. 60 bis 80 °C. Das Kondensat fließt in den Sammelbehälter 7 ab. Dort staut es sich, da das Ventil 8 zum Verdampfer während der Desorption geschlossen ist. Der aus dem Sorptionsmittel abströmende Wasserdampf reißt eventuell gebildete Inertgase mit in den Sammelbehälter 7. Mitgefördertes CO₂ reagiert mit dem Atemkalk der Patrone 11 zu nicht löslichem Kalziumkarbonat CaCO₃ unter Abgabe eines Wassermoleküls.

Eventuell vorhandenes Wasserstoffgas H₂ wird im Sammelbehälter 7 nicht gebunden. Es strömt vielmehr zu Beginn der folgenden Adsorptionsphase zurück in den Sorptionsmittelbehälter 2. Hier kann es mit dem noch heißen CuO zu Wasser und metallischem Kupfer reagieren.
Sobald das Kondensat im Sammelbehälter 7 abgekühlt ist, wird das Ventil 8 geöffnet. Das Kondensat kann dann in den Verdampfer 9 abströmen und sich dort mit dem noch vorhandenen Eiswasser mischen. Der danach aus dem Verdampfer 9 in das Sorptionsmittel abströmende Wasserdampf kann vom Zeolith adsorbiert werden. Die Strömung behindernde Inertgase wie CO₂ und H₂ sind innerhalb des Sorptionssystems 1 gebunden bzw. umgesetzt worden. Sich neu bildende Inertgase werden bei jedem folgenden Zyklus gebunden. Das Wasser 12 im Verdampfer 9 kann bei fortgesetzter Verdampfung wieder zu Eis gefrieren und während der folgenden Desorption schmelzen und die Kühlung aufrecht erhalten.

Vor einer Erstinbetriebnahme befinden sich außer den notwendigen System-Komponenten, dem Arbeitsmittel und dem Sorptionsmittel noch viele inerte Gase im Sorptionssystem 1, die möglichst restlos entfernt werden müssen.
Erfindungsgemäß wird hierzu über das Evakuierventil 13 das Gesamtsystem evakuiert. Zu diesem Zeitpunkt enthält der Verdampfer 9 etwas Wasser 12 und der Zeolith das restliche Arbeitsmittel. Nachdem das Verdampfer-Wasser 12 durch Evakuieren und gegebenenfalls Nacherwärmen entgast ist, wird das Ventil 8 zum Sammelbehälter 7 geschlossen und die Zeolithfüllung auf hohe Temperaturen erhitzt. Der dabei entweichende Wasserdampf reißt alle noch vorhandenen Inertgase mit in den Sammelbehälter 7 von wo aus sie über das Evakuierventil 13 aus dem Sorptionssystem 1 abgesaugt werden.
Besonders wirkungsvoll ist das Inbetriebnahme-Verfahren, wenn dabei die Kondensatortemperatur auf über 80 °C ansteigen kann. Bei höheren Temperaturen können sich vorabsorbierte Gase leichter aus den metallischen Oberflächen der Behältermaterialien ablösen und über das Evakuierventil 13 abgesaugt werden.

## Patentansprüche

1. Geschlossenes Sorptionssystem mit einem dampfförmigen Arbeitsmittel, das von einem festen Sorptionsmittel reversibel und periodisch sorbiert wird,
**dadurch gekennzeichnet, dass**
das Sorptionssystem einen Reaktions-Stoff enthält, der mindestens eines im Sorptionsmittel nicht oder nur schwer sorbierbares Inertgas bindet und
dass der Reaktions-Stoff mindestens soviel Inertgas binden kann, wie im Sorptionssystem durch Entgasung oder chemischer Reaktion der darin enthaltenen Materialien während der gesamten Betriebszeit frei wird und
dass als Reaktionsprodukte lediglich unlösliche Stoffe und eventuell Wasser entstehen.

2. Geschlossenes Sorptionssystem nach Anspruch 1,
**dadurch gekennzeichnet, dass**
der Reaktions-Stoff ein Metallhydrid enthält, das Wasserstoff in der Kristallstruktur des Metalls bindet.

3. Geschlossenes Sorptionssystem nach einem der vorangehenden Ansprüche,
**dadurch gekennzeichnet, dass**
der Reaktions-Stoff ein Metalloxid enthält, das Wasserstoff zu Wasser oxidiert.

4. Geschlossenes Sorptionssystem nach Anspruch 3,
**dadurch gekennzeichnet, dass**
das Metalloxid Kupferoxid (CuO) enthält.

5. Geschlossenes Sorptionssystem nach einem der vorangehenden Ansprüche,
**dadurch gekennzeichnet, dass**
das Metalloxid im periodisch geheizten Bereich des Sorptionssystem untergebracht ist.

6. Geschlossenes Sorptionssystem nach einem der vorangehenden Ansprüche,
**dadurch gekennzeichnet, dass**
das Metalloxid in Pulverform eingefüllt ist.

7. Geschlossenes Sorptionssystem nach einem der vorangehenden Ansprüche,
**dadurch gekennzeichnet, dass**
das Metalloxid als Oxidschicht auf einer Metallfolie aufoxidiert ist.

8. Geschlossenes Sorptionssystem nach Anspruch 7,
**dadurch gekennzeichnet, dass** die Metallfolie Teil eines Wärmetauschers ist, der das Sorptionsmittel erhitzen kann.

9. Geschlossenes Sorptionssystem nach einem der vorangehenden Ansprüche,
**dadurch gekennzeichnet, dass**
das Metalloxid im Bereich des Sorptionsmittels oder hinter diesem angeordnet ist.

10. Geschlossenes Sorptionssystem nach einem der vorangehenden Ansprüche,
**dadurch gekennzeichnet, dass**
das Metalloxid bei der Herstellung von Sorptionsmittel-Granulat in das Sorptionsmittels mit eingearbeitet wird.

11. Geschlossenes Sorptionssystem nach einem der vorangehenden Ansprüche,
**dadurch gekennzeichnet, dass**
der Reaktions-Stoff als Metallpulver bei der Weiterverarbeitung pulverförmigem Sorptionsmittels zu Granulat zugemischt wird und bei der Erhitzung des granulierten Sorptionsmittels an Luft oxidiert.

12. Geschlossenes Sorptionssystem nach einem der vorangehenden Ansprüche,
**dadurch gekennzeichnet, dass**
das durch Wasserstoff redoxidierte Metall innerhalb des abgeschlossenen Sorptionssystems mit sich während der Gesamtbetriebszeit gebildeten Sauerstoff wieder zu Metalloxid oxidiert.

13. Geschlossenes Sorptionssystem nach einem der vorangehenden Ansprüche,
**dadurch gekennzeichnet, dass** der Reaktions-Stoff Atemkalk enthält.

14. Verfahren zur ersten Inbetriebnahme eines geschlossenen Sorptionssystems nach einem der vorangehenden Ansprüche,
**dadurch gekennzeichnet, dass**
das mit Arbeitsmittel voradsorbierte Sorptionsmittel auf über 250 °C erhitzt wird und der dabei abströmende Arbeitsmitteldampf Gase aus dem Bereich des Sorptionsmittels mitreißt.

15. Verfahren zur ersten Inbetriebnahme eines geschlossenen Sorptionssystems nach Anspruch 14,
**dadurch gekennzeichnet, dass** das Arbeitsmittel in einem Verflüssigungsbereich innerhalb des Sorptionssystems bei Temperaturen über 60°C und insbesondere bei Temperaturen über 80°C auskondensieren kann.

16. Verfahren zur ersten Inbetriebnahme eines geschlossenen Sorptionssystems nach einem der vorangehenden Ansprüche,
**dadurch gekennzeichnet, dass**
das Sorptionssystem an einer Stelle evakuiert wird, die in Strömungsrichtung hinter dem Verflüssigungsbereich angeordnet ist und somit der aus dem Sorptionsmittel abströmende Arbeitsmitteldampf durch den Verflüssigungsbereich geführt wird, bevor mitgerissene Inertgase aus dem Sorptionssystem abgesaugt werden.
